# EUROPÄISCHE PATENTSCHRIFT

(11) **EP 2 025 424 B1**
(45) Veröffentlichungstag und Bekanntmachung des Hinweises auf die Patenterteilung: **17.02.2010**
(21) Anmeldenummer: 08009525.0
(22) Anmeldetag: 24.05.2008
(51) Int. Cl.: B21C 37/08, B21D 53/88, B62D 25/14

(54) **Verfahren zur Herstellung eines rohrförmigen Tragprofils für einen Instrumententräger**
Method for manufacturing a tubular supporting beam for an instrument holder
Procédé de fabrication d'un profilé de support tubulaire pour un support d'instruments

(30) Priorität: 10.08.2007 DE 102007038036
(43) Veröffentlichungstag der Anmeldung: 18.02.2009
(73) Patentinhaber: Benteler Automobiltechnik GmbH, 33104 Paderborn (DE)
(72) Erfinder: Hitz, Andreas, 59597 Erwitte (DE); Knaup, Hans-Jürgen, 33175 Lippspringe (DE)
(74) Vertreter: Ksoll, Peter

(56) Entgegenhaltungen:
- EP-A- 0 788 849
- DE-A1-102006 001 348
- JP-A- 58 167 039
- US-A- 5 119 552
- US-A1- 2006 096 099

## Beschreibung

Die Erfindung betrifft ein Verfahren zur Herstellung eines rohrförmigen Tragprofils für einen Instrumententräger gemäß den Merkmalen im Oberbegriff von Anspruch 1 (siehe z.B. EP-A-0 788 849).

Instrumententräger werden in Kraftfahrzeugen als tragendes Bauteil für diverse Cockpit-Funktionen eingesetzt. Eine der Hauptkomponenten eines Instrumententrägers ist der Querträger. Der Querträger erstreckt sich im Kraftfahrzeug zwischen den A-Säulen quer zur Fahrtrichtung und hat versteifende Wirkung auf die Fahrzeugkarosserie. Die Querträger werden in der Automobilindustrie in der Regel aus einem oder mehreren Tragprofilen ausgebildet.

Die EP 0 990 578 B1 beispielsweise beschreibt einen mehrteilig aufgebauten Querträger.

Die DE 299 16 470 U1 offenbart einen Querträger, der aus zwei miteinander verbundenen Metallschalen hergestellt ist. Demgegenüber sieht die DE 103 59 746 B4 vor, den Querträger einteilig aus einer Platine als geschlossenes Kastenprofil auszubilden.

Grundsätzlich muss der Instrumententräger verschiedene Funktionen erfüllen. Er dient neben der Versteifung der Karosserie zur Energieaufnahme im Crashfall und zum Verbinden verschiedener Raumpunkte bzw. zur Festlegung von diversen Halterungen. Des Weiteren muss der Instrumententräger für den Betrieb in unterschiedlichen Frequenzbereichen geeignet sein, weil im Fahrbetrieb diverse Schwingungen, beispielsweise durch Fahrwerks- oder Motoranregungen, auftreten.

Am Querträger sind diverse Halterungen angeordnet für die Instrumententafel selber sowie zur Halterung bzw. Befestigung weiterer Fahrzeugfunktionskomponenten wie der Lenksäule, Heizungs- und Klimaanlage, Airbag, Mittelkonsole, Sicherungskasten oder Handschuhfach. Zur Festlegung der vorgenannten Fahrzeugfunktionskomponenten bzw. deren Halterungen werden in den Querträger Löcher, Aussparungen oder Prägungen eingebracht, deren Aufgabe es ist, als Anbindungspunkte zu dienen. Teilweise sind die Anbindungspunkte mit Verbindungselementen wie Muttern oder Bolzen versehen. Das nachträgliche Setzen von Verbindungselementen ist jedoch arbeitsaufwändig und kostenintensiv.

Die DE 10 2006 001 348 A1 offenbart einen Querträger mit Haltevorrichtung, wobei an einem Querträger-Basisteil mindestens ein aus einem anderen Material bestehenden Halter angebracht ist. Der Halter soll aus einem Leichtmetall oder aus Kunststoff bestehen und außenseitig am Querträger-Basisteil angegossen werden. Auch diese Vorgehensweise erscheint fertigungstechnisch aufwändig.

Der Erfindung liegt ausgehend vom Stand der Technik die Aufgabe zu Grunde, ein Verfahren zur Herstellung eines rohrförmigen Tragprofils für einen Querträger eines Instrumententrägers rationeller und kostengünstiger zu gestalten.

Die Lösung dieser Aufgabe besteht nach der Erfindung in einem Verfahren gemäß den Merkmalen von Anspruch 1.

Zur Herstellung eines erfindungsgemäßen Tragprofils wird eine Blechplatine in ein Umformwerkzeug eingelegt und von einem Stempel in eine U-förmige Ausnehmung eines Unterwerkzeugs gepresst. Nach diesem ersten Umformschritt wird das U-Profil, im Unterwerkzeug liegend, mit Verbindungselementen versehen. Bei den Verbindungselementen kann es sich um Muttern, insbesondere Stanzmuttern, Schraubbolzen oder ähnliches handeln. Die Verbindungselemente werden mittels einer automatisierten Setzvorrichtung in das U-Profil eingebracht und gefügt. Anschließend wird das U-Profil in ein zweites Unterwerkzeug transferiert und in einem weiteren Umformschritt zwischen einem Oberwerkzeug und dem Unterwerkzeug zu einem Schlitzrohr umgeformt und danach die Längskanten fügetechnisch verbunden, so dass das rohrförmige Tragprofil entsteht.

Mit dem erfindungsgemäßen Verfahren kann das nachträgliche Setzen von Verbindungselementen ganz oder zumindest zu einem großen Teil eingespart werden. Dies führt zu einer Verringerung der Herstellungskosten. Auch weitere, separate Fertigungsschritte wie das Lochen oder Prägen des Tragprofils ebenso wie das Aufweiten oder Einziehen der Rohrenden oder das Biegen des Tragprofils können entfallen oder reduziert werden.

Ein erfindungsgemäß hergestelltes Tragprofil kann als Ganzes den Querträger eines Instrumententrägers bilden und sich zwischen den A-Säulen der Fahrzeugkarosserie erstrecken. Es ist aber auch möglich, ein erfindungsgemäß hergestelltes Tragprofil mit weiteren Tragprofilen oder -komponenten zu kombinieren, um einen Querträger zu bilden. Das Tragprofil befindet sich dann innerhalb des Querträgers auf der Fahrerseite und/oder der Beifahrerseite eines Instrumententrägers.

Vorteilhafte Ausgestaltungen des grundsätzlichen Erfindungsgedankens sind Gegenstand der abhängigen Ansprüche 2 bis 7.

Das Tragprofil erhält seine räumliche Querschnittskonfiguration bei der Umformung im Umformwerkzeug. Hierbei können insbesondere in den Unterwerkzeugen rechteckige Querschnitte mit ebenen Flächen erzeugt werden, wohingegen das Tragprofil an der oberen Hälfte einen balligen bzw. gerundeten Querschnittsverlauf erhält.

Grundsätzlich kann die Blechplatine vor der Umformung zum U-Profil gelocht werden. Im Rahmen der Erfindung ist es auch möglich, das U-Profil im Unterwerkzeug zu lochen. Dies bietet sich insbesondere in räumlich gekrümmt verlaufenden Bereichen des U-Profils an. Das Lochen kann mit separaten Lochwerkzeugen durchgeführt werden oder gemeinsam mit dem Einbringen der Verbindungselemente erfolgen.

Ein weiterer wesentlicher Vorteil des erfindungsgemäßen Verfahrens ist, dass am Tragprofil Abschnitte unterschiedlicher Querschnittskonfigurationen ausgeformt werden können. Durch eine geeignete Werkzeugkontur des Umformwerkzeugs kann das Tragprofil sowohl in axialer als auch in radialer Richtung einen frei wählbaren Querschnittsverlauf erhalten. Insbesondere kann das Tragprofil auch einen räumlich gekrümmten Querschnittsverlauf mit gebogenen Abschnitten erhalten.

Des Weiteren ist die Ausbildung von ebenen Flächenbereichen am Tragprofil möglich. Diese werden am U-Profil im Unterwerkzeug erzeugt.

Zur gezielten Beeinflussung des Festigkeits- und Steifigkeitsverhaltens des Tragprofils kann dieses lokal mit Verstärkungsblechen versehen werden. Die Verstärkungsbleche werden ebenfalls bereits mit dem U-Profil gefügt bevor dieses zum rohrförmigen Tragprofil endgeformt wird. Weiterhin ist es möglich bereits die ebene Blechplatine bereichsweise mit Verstärkungsblechen zu versehen bevor diese zum U-Profil umgeformt wird.

Das erfindungsgemäß hergestellte Tragprofil kann als einteiliges Bauteil, welches sich zwischen den A-Säulen eines Kraftfahrzeugs erstreckt, zum Einsatz gelangen. Grundsätzlich kann auch nur ein kurzes Tragprofil erfindungsgemäß hergestellt werden, welches mit weiteren Profilbauteilen zum kompletten Querträger ergänzt wird. Auch zwei oder mehr erfindungsgemäß hergestellte Tragprofile können zu einem Querträger zusammengesetzt werden.

Die Erfindung ist nachfolgend anhand von in den Zeichnungen dargestellten Ausführungsbeispielen näher beschrieben. Es zeigen:
- Figur 1: in perspektivischer Darstellungsweise einen Instrumententräger;
- Figur 2: den Ablauf bei der Herstellung eines Tragprofils in vier schematisch dargestellten Fertigungsschritten a-d;
- Figur 3-5: ein erfindungsgemäß hergestelltes Tragprofil eines Instrumententrägers in drei verschiedenen Ansichten und
- Figur 6: den schematischen Ablauf zur Herstellung einer weiteren Ausführungsform eines Tragprofils mit der Darstellung von zwei Fertigungsstufen.

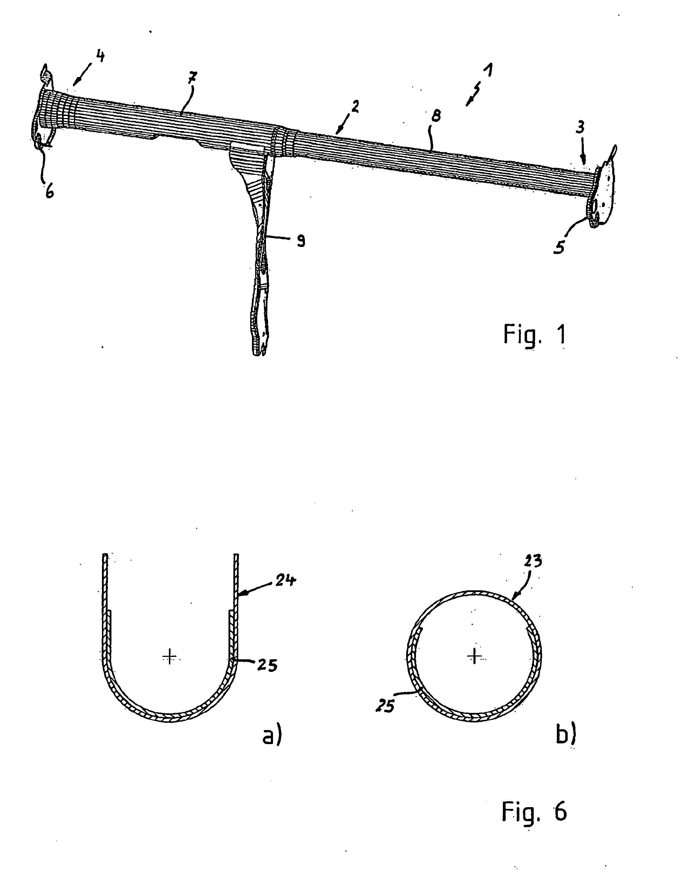

Figur 1 zeigt in perspektivischer Darstellungsweise einen Instrumententräger 1. Der Instrumententräger 1 umfasst einen sich zwischen den hier nicht dargestellten A-Säulen eines Kraftfahrzeugs erstreckenden Querträger 2. An seinen beiden Enden 3, 4 ist der Querträger 2 mit Flanschbauteilen 5, 6 versehen. Über die Flanschbauteile 5, 6 kann der Instrumententräger 1 an den A-Säulen einer Kraftfahrzeugkarosserie festgelegt werden.

Der Querträger 2 ist aus zwei Tragprofilen 7, 8 zusammengesetzt. Das Tragprofil 7 weist einen variierenden Querschnittsverlauf auf und erstreckt sich über die Fahrerseite eines Kraftfahrzeugs. Das Tragprofil 8 ist von einem Rohr mit gleich bleibendem Durchmesser gebildet. Etwa im mittleren Bereich des Querträgers 2 sind die Tragprofile 7, 8 miteinander gefügt. Man erkennt des Weiteren, dass am Tragprofil 7 eine Halterung 9 für die Mittelkonsole festgelegt ist.

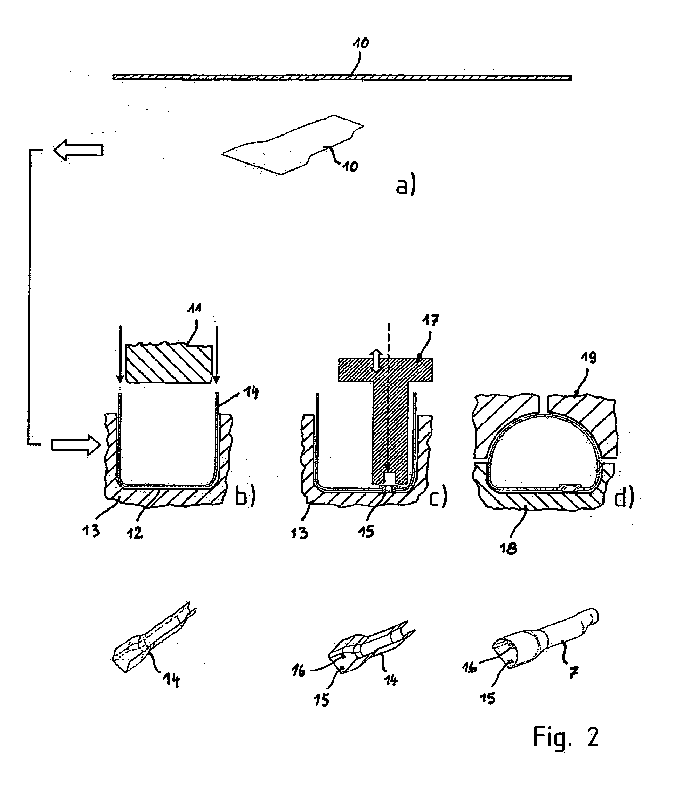

Die Herstellung eines Tragprofils 7 ist anhand der Figur 2 in verschiedenen Verfahrensschritten erläutert. Grundsätzlich kann aber auch das Tragprofil 8 in gleicher Weise hergestellt werden. Auch die Herstellung eines einteiligen Tragprofils für einen Querträger, der sich von der einen A-Säule zur anderen A-Säule erstreckt ist mit dem erfindungsgemäßen Verfahren möglich.

Ausgangsprodukt bildet eine Blechplatine 10, welche von einem Coil abgelängt und bedarfsgerecht zugeschnitten ist (siehe Figur 2a)). Die Figur 2a) zeigt die Blechplatine 10 einmal in einer Seitenansicht und einmal in verkleinertem Maßstab in einer Perspektive. Die Blechplatine 10 kann vor der Umformung gelocht werden.

Die Blechplatine 10 wird in ein Umformwerkzeug eingelegt und von einem Stempel 11 in eine U-förmige Ausnehmung 12 eines Unterwerkzeugs 13 gepresst. In diesem ersten Umformschritt wird die Blechplatine 10 zu einem U-Profil 14 umgeformt. Dies ist anhand der Figur 2b) verdeutlicht. Die untere Darstellung der Figur 2b) zeigt das U-Profil 14 in stark verkleinertem Maßstab in einer Perspektive. Man erkennt, dass das U-Profil 14 über seine Länge einen unterschiedlichen Querschnittsverlauf besitzt, mit ebenen Flächenbereichen und gekrümmt verlaufenden Abschnitten. Stempel 11, Ausnehmung 12 und Unterwerkzeug 13 sind in der Figur 2b) technisch stark vereinfacht dargestellt.

Nach dem ersten Umformschritt wird das U-Profil 14, im Unterwerkzeug 13 liegend, mit Verbindungselementen 15, 16, wie in der Figur 2c) ersichtlich, versehen. Bei den Verbindungselementen 15, 16 handelt es sich im dargestellten Ausführungsbeispiel um Stanzmuttern, welche von einer automatischen Setzvorrichtung 17 in das U-Profil 14 eingebracht und gefügt werden. Auch andere Verbindungselemente, wie Schraubbolzen und Ähnliches können automatisiert gesetzt werden.

Auch in der Figur 2c) ist in der unteren Bildhälfte das U-Profil 14 mit gesetzten Verbindungselementen 15, 16 perspektivisch in verkleinertem Maßstab dargestellt.

Das mit den Verbindungselementen 15, 16 versehene U-Profil 14 wird dann in ein zweites Unterwerkzeug 18 überführt und in einem zweiten Umformschritt zwischen einem Oberwerkzeug 19 und dem Unterwerkzeug 18 zu einem Schlitzrohr umgeformt. Während der Umformung stützen sich die Stoßkanten des Profils gegenseitig ab, bis die Endkontur vollständig ausgeformt ist. Anschließend werden die Längskanten fügetechnisch, vorzugsweise mit Schweißen, verbunden, so dass das Tragprofil 7 entsteht. Das Tragprofil 7 ist in der Figur 2d) in einem vertikalen Querschnitt und darunter in einer verkleinerten perspektivischen Darstellung zu erkennen.

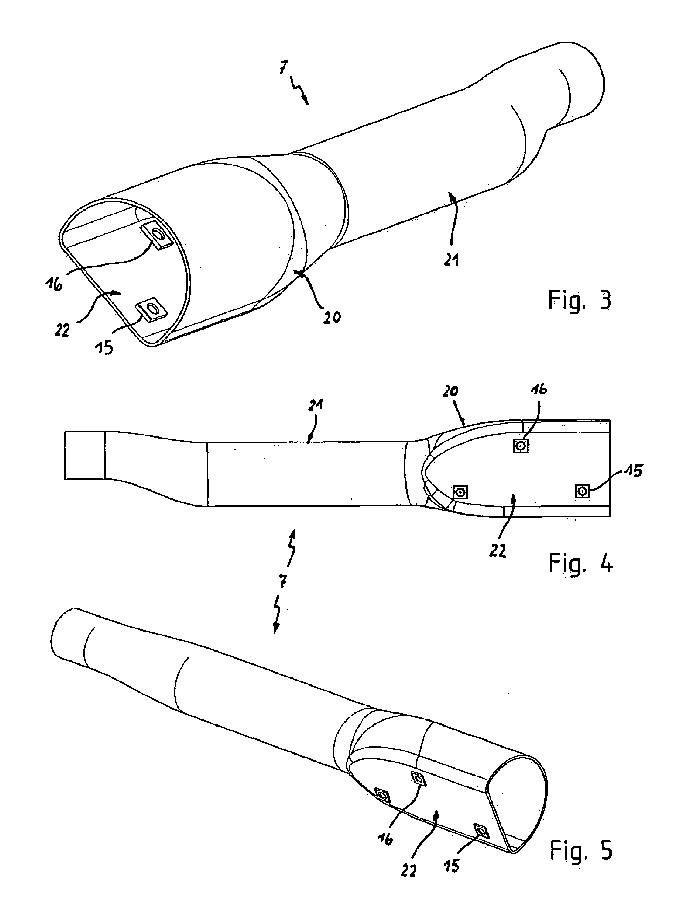

Das Tragprofil 7 ist in den Figuren 3 bis 5 nochmals in verschiedenen Ansichten dargestellt. Man erkennt, dass das Tragprofil 7 Abschnitte 20, 21 unterschiedlicher Querschnittskonfigurationen aufweist mit einem sowohl in axialer als auch in radialer Richtung variierendem Querschnittsverlauf. Des Weiteren besitzt das Tragprofil 7 einen eben ausgebildeten Flächenbereich 22. Dieser ebene Flächenbereich 22 ist im Unterwerkzeug 13 bei der Ausbildung des U-Profils 14 erzeugt worden. Im ebenen Flächenbereich 22 sind die Verbindungselemente 15, 16 eingebracht.

Die Figur 6 zeigt die Herstellung eines Tragprofils 23, welches grundsätzlich in gleicher Weise hergestellt worden ist wie zuvor beschrieben. Eine Ausgangsplatine wird zunächst in einem Unterwerkzeug zu einem U-Profil 24 umgeformt und mit hier nicht dargestellten Verbindungselementen versehen.

Das Tragprofil 23 ist bereichsweise durch Verstärkungsbleche 25 verstärkt. Solche Verstärkungsbleche 25 können bereits auf die ebene Blechplatine vor der Umformung zum U-Profil 24 aufgebracht worden sein. Anschließend wird die Blechplatine dann zum U-Profil 24 umgeformt. Möglich ist es auch, das U-Profil 24 nach dem ersten Umformschritt mit Verstärkungsblechen 25 zu versehen.

Das mit den Verstärkungsblechen versehene U-Profil 24 wird dann in einem zweiten Umformschritt zwischen einem Oberwerkzeug 19 und einem Unterwerkzeug 18 zum rohrförmigen Tragprofil 23 umgeformt und entlang der Längskanten gefügt.

**Bezugszeichen:**
1 - Instrumententräger
2 - Querträger
3 - Ende v. 2
4 - Ende v. 2
5 - Flanschbauteil
6 - Flanschbauteil
7 - Tragprofil
8 - Tragprofil
9 - Halterung
10 - Blechplatine
11 - Stempel
12 - Ausnehmung
13 - Unterwerkzeug
14 - U-Profil
15 - Verbindungselement
16 - Verbindungselement
17 - Setzvorrichtung
18 - Unterwerkzeug
19 - Oberwerkzeug
20 - Abschnitt
21 - Abschnitt
22 - Flächenbereich
23 - Tragprofil
24 - U-Profil
25 - Verstärkungsblech

## Patentansprüche

1. Verfahren zur Herstellung eines rohrförmigen Tragprofils (7, 8, 22) für einen Instrumententräger (1), bei welchem eine Blechplatine (10) in ein Umformwerkzeug eingelegt und von einem Stempel (11) in eine U-förmige Ausnehmung (12) eines ersten Unterwerkzeugs (13) gepresst und in einem ersten Umformschritt zu einem U-Profil (14, 24) umgeformt wird, worauf das U-Profil (14, 24) in einem zweiten Umformschritt zwischen einem Oberwerkzeug (19) und einem zweiten Unterwerkzeug (18) zu einem Schlitzrohr umgeformt und danach die Längskanten fügetechnisch verbunden werden, **dadurch gekennzeichnet, dass** das U-Profil (14, 24) im ersten Unterwerkzeug (13) mit Verbindungselementen wie Stanzmuttern, Schraubbolzen oder ähnliches (15, 16) versehen wird.

2. Verfahren nach Anspruch 1, **dadurch gekennzeichnet, dass** das U-Profil (14, 23) im ersten Unterwerkzeug (13) gelocht wird.

3. Verfahren nach Anspruch 1 oder 2, **dadurch gekennzeichnet, dass** am Tragprofil (7) Abschnitte (20, 21) unterschiedlicher Querschnittskonfiguration ausgeformt werden.

4. Verfahren nach einem der Ansprüche 1 bis 3, **dadurch gekennzeichnet, dass** am U-Profil (14) zumindest ein ebener Flächenbereich (22) erzeugt wird.

5. Verfahren nach einem der Ansprüche 1 bis 4, **dadurch gekennzeichnet, dass** das U-Profil (24) bereichsweise mit Verstärkungsblechen (25) versehen wird.

6. Verfahren nach einem der Ansprüche 1 bis 5, **dadurch gekennzeichnet, dass** die Blechplatine vor der Umformung bereichsweise mit Verstärkungsblechen (25) versehen wird.

7. Verfahren nach einem der Ansprüche 1 bis 6, **dadurch gekennzeichnet, dass** die Blechplatine (10) vor der Umformung gelocht wird.

## Claims

1. Method of producing a tubular supporting profile (7, 8, 22) for an instrument support (1), in which a sheet metal plate (10) is inserted in a shaping die and pressed by a die stamp (11) into a U-shaped recess (12) of a first lower tool (13) and reshaped, in a first shaping step, into a U-profile (14, 24) whereupon the U-profile (14, 24), in a second shaping step, is reshaped between an upper tool (19) and a second lower tool (18) into an open seam tube and thereafter the longitudinal edges are connected using jointing techniques, **characterised in that** the U-profile (14, 24) is provided with connecting elements (15, 16) such as stamping nuts, screw bolts or suchlike, in the first lower tool (13).

2. Method according to claim 1, **characterised in that** the U-profile (14, 23 [sic; 24]) is perforated in the first lower tool (13).

3. Method according to claim 1 or 2, **characterised in that** sections (20, 21) of varying cross-section configuration are formed on the supporting profile (7).

4. Method according to one of claims 1 to 3, **characterised in that** at least one level surface area (22) is generated on the U-profile (14).

5. Method according to one of claims 1 to 4, **characterised in that** the U-profile (24) is provided with reinforcing metal plates (25) in some areas.

6. Method according to one of claims 1 to 5, **characterised in that**, prior to reshaping, the sheet metal plate is provided with reinforcing metal plates (25) in some areas.

7. Method according to one of claims 1 to 6, **characterised in that** the sheet metal plate (10) is perforated prior to reshaping.

## Revendications

1. Procédé de fabrication d'un profilé porteur de forme tubulaire (7, 8, 22) pour un porte-instruments (1), dans lequel une plaque en tôle (10) est placée dans un outil de mise en forme et pressée par un poinçon (11) dans un évidement (12) en forme de U d'un premier outil inférieur (13) et est transformée en un profilé en U (14, 24) dans une première passe de mise en forme, suite à quoi le profilé en U (14, 24) est transformé en un tube fendu dans une deuxième passe de mise en forme entre un outil supérieur (19) et un second outil inférieur (18) et ensuite les arêtes longitudinales sont reliées par des techniques d'assemblage,
**caractérisé en ce que** le profilé en U (14, 24) est dotée d'éléments de jonction (15, 16), comme des écrous estampés, des goujons à visser ou analogues, dans le premier outil inférieur (13).

2. Procédé selon la revendication 1, **caractérisé en ce que** le profilé en U (14, 23) est troué dans le premier outil inférieur (13).

3. Procédé selon la revendication 1 ou 2, **caractérisé en ce que** des tronçons (20, 21) présentant différentes configurations de section transversale sont conformés sur le profilé porteur.

4. Procédé selon l'une des revendications 1 à 3, **caractérisé en ce qu'**au moins une zone surfacique plane (22) est générée sur le profilé en U (14).

5. Procédé selon l'une des revendications 1 à 4, **caractérisé en ce que** le profilé en U (24) est doté localement de tôles de renforcement (25).

6. Procédé selon l'une des revendications 1 à 5, **caractérisé en ce que** la plaque en tôle est dotée localement de tôles de renforcement (25) avant la mise en forme.

7. Procédé selon l'une des revendications 1 à 6, **caractérisé en ce que** la plaque en tôle (10) est trouée avant la mise en forme.
